# EUROPEAN PATENT SPECIFICATION

(11) **EP 2 758 289 B1**
(45) Date of publication and mention of the grant of the patent: **29.11.2017**
(21) Application number: 11872632.2
(22) Date of filing: 21.09.2011
(51) Int. Cl.: B60S 3/04, B61K 13/00

(54) **ANTI-ICING SYSTEM FOR REDUCING THE ICING OF A VEHICLE ON TRACKS AND METHOD OF REDUCING ICING OF A VEHICLE ON TRACKS**
ENTEISUNGSSYSTEM ZUR REDUZIERUNG DER VEREISUNG EINES FAHRZEUGS AUF DER STRASSE UND VERFAHREN ZUR REDUZIERUNG DER VEREISUNG EINES FAHRZEUGS AUF DER STRASSE
SYSTÈME ANTIGIVRE DESTINÉ À RÉDUIRE LE GIVRE D'UN VÉHICULE SUR RAILS ET PROCÉDÉ DE RÉDUCTION DU GIVRE D'UN VÉHICULE SUR RAILS

(43) Date of publication of application: 30.07.2014
(73) Proprietor: Nordic Ground Support Equipment IP AB, 116 45 Stockholm (SE)
(72) Inventor: LARSSON, Anders, S-113 36 Stockholm (SE)
(74) Representative: Awapatent AB
(86) International application number: PCT/SE2011/051130
(87) International publication number: WO 2013/043090

(56) References cited:
- WO-A1-79/00331
- WO-A1-79/00331
- CN-U- 201 530 397
- GB-A- 2 246 991
- JP-A- 2000 198 423
- JP-A- 2002 037 069
- JP-A- 2002 059 815
- US-A1- 2009 188 989

## Description

### Field of the invention

The present invention relates to an anti-icing system for reducing the icing of a vehicle on tracks, the anti-icing system comprising a spray nozzle arrangement for spraying an anti-icing liquid onto the vehicle. The invention also relates to a method of reducing icing of a vehicle on tracks, the method comprising moving the vehicle relative to a spray nozzle arrangement.

### Background of the invention

In cold climate, ice build-up on trains is a safety risk, and therefore trains frequently need to be taken out of traffic for de-icing. US 2009/0188989 A1 discloses a method and a device for de-icing of a train. According to the method of US 2009/0188989, heated glycol is sprayed against the underside of locomotive and carriages in order to remove the ice built up on the base frames of the units. After de-icing, the train may be put back in service again. Further anti-icing systems for vehicles are disclosed in CN 201 530 397 U and WO 79/00331 A1.

A train represents a significant investment, and it is desirable that the train be in service as much as possible. Therefore, there is a need to improve the availability or uptime of trains in cold climate.

### Summary of the invention

It is an object of the present invention to solve, or at least mitigate, parts or all of the above mentioned problems. To this end, there is provided an anti-icing system for reducing the icing of a vehicle on tracks, the anti-icing system comprising a spray nozzle arrangement for spraying an anti-icing liquid onto the vehicle; means for determining the location, relative to the spray nozzle arrangement, of a portion to be sprayed of said vehicle; and a controller configured to, based on the location of the vehicle portion to be sprayed, initiate an increase or a decrease of a primary flow of anti-icing liquid through at least a portion of said spray nozzle arrangement. Here, the term primary is used for identification purposes only, and does not signify any order or preference; nor does it imply that there be any other flow than the primary flow. Clearly, an increase of a flow from zero is also an increase.
Using such an anti-icing system, less time and effort need be spent on de- or anti-icing parts of the vehicle that are not critical to the functioning or safety of the vehicle. Thereby, the total time required for spraying a vehicle will be reduced, such that the vehicle may more quickly be put back in service. Furthermore, the anti-icing system allows reducing the consumption of anti-icing liquid and/or energy for heating the anti-icing liquid, thereby sparing the environment and reducing operating cost. By way of example, the controller may be configured to provide an increased primary flow when the vehicle portion to be sprayed is located in a spray zone in front of the spray nozzle arrangement, and/or a decreased primary flow when the vehicle portion is no longer in the spray zone. The vehicle portion to be sprayed may be predefined in the anti-icing system so as to focus spraying onto e.g. the vehicle front, a coupling, a wheel unit, or a wheel unit area. Alternatively, the vehicle portion to be sprayed may be dynamically determined by the anti-icing system during operation, e.g. by automatically identifying iced areas of the vehicle using any suitable ice detection means. The anti-icing system comprises means for determining the location, relative to the spray nozzle arrangement, of a wheel unit of said vehicle, wherein the controller is configured to, based on the location of a wheel unit, initiate an increase or a decrease of an auxiliary flow of anti-icing liquid through at least a portion of said spray nozzle arrangement. Also the term auxiliary is used for identification purposes only, and does not signify any order or preference. The controller may be configured to provide an increased auxiliary flow when the wheel unit is located in a spray zone in front of the spray nozzle arrangement, and/or a decreased auxiliary flow when the wheel unit is no longer in the spray zone. In this manner, spraying will be focused on the wheel units, which typically belong to the most ice sensitive parts of a vehicle, thereby even further reducing spraying time and saving anti-icing liquid. The primary flow may be directed through a first portion of the spray nozzle arrangement, and the auxiliary flow may be directed through a second portion of the spray nozzle arrangement, said second portion being at least partly different from said first portion. Alternatively, the primary and auxiliary flows may be directed through the same spray nozzle(s).

According to an embodiment, said means for determining the location of a vehicle portion to be sprayed comprises a sensor arrangement comprising at least one wheel sensor. According to an embodiment, said at least one wheel sensor comprises an inductive sensor arranged at a track. Such an embodiment provides an accurate reading and typically does not respond to passages of e.g. a person walking along the track.

According to an embodiment, the anti-icing system comprises at least one counter for counting a number of wheel passages past said sensor arrangement. If also combined with a wheel sensor of high-accuracy type, such as an inductive sensor, the risk of losing count of the number of wheel passages is minimized.

According to an embodiment, the controller is configured to count a number of wheel passages past said sensor arrangement; to, for each of a plurality of wheel passages past any of said at least one wheel sensor, obtain a specific wheel-and-sensor combination identifying the location of a portion of the vehicle; and to, for each of a plurality of said wheel-and-sensor combinations, increase and/or decrease said primary and/or auxiliary flow(s) based on the respective wheel-and-sensor combination. Each wheel-and-sensor combination identifies the instantaneous location of not only the wheel of that particular wheel-and-sensor combination, but of each point along the entire vehicle. Thereby, wheel-and-sensor combinations may be used for selectively spraying portions of the vehicle, such as wheel units and/or wheel unit areas, with a high accuracy, rendering the spraying more efficient.

According to an embodiment, said sensor arrangement comprises a plurality of wheel sensors separated longitudinally along the tracks. Thereby, the position of the vehicle along the tracks may be obtained with a relatively high resolution, which increases the accuracy of the spraying. This may be of particular value e.g. in the event that the vehicle would change its speed during anti-icing. Preferably, said plurality of wheel sensors comprises at least three, and even more preferred, at least four longitudinally separated sensors. Such a design provides for a large number of unique wheel-and-sensor combinations, offering a high resolution to the determination of the location of the vehicle.

According to an embodiment, the controller is configured to initiate at least one of said increase and/or decrease of a primary and/or auxiliary flow(s) based on a first wheel being sensed by a first sensor of said sensor arrangement; and to initiate at least one of said increase and/or decrease of a primary and/or auxiliary flow(s) based on a second wheel being sensed by a second sensor of said sensor arrangement, said second wheel and second sensor being different from said first wheel and first sensor, respectively. Here, the terms first and second are only used for distinguishing individual wheels and sensors from each others, and do not signify any order.

According to an embodiment, the spray nozzle arrangement comprises a plurality of spray nozzles, and the controller is configured to select a portion of said plurality of spray nozzles; and to initiate said increase and/or decrease of said primary and/or auxiliary flow(s) through the selected portion of the plurality of spray nozzles so as to form a selected spray pattern. In this manner the spraying may be intensified, or the spray pattern may be modified as needed, as vehicle portions to be sprayed, such as wheel units or wheel unit areas, pass the spray nozzle arrangement.

According to an embodiment, the anti-icing system further comprises means for identifying a vehicle type, the controller being configured to select said portion of said plurality of spray nozzles based on an identified vehicle type. Thereby, the spray pattern may be optimized for each specific vehicle type, which renders the spraying more efficient.

According to an embodiment, said means for identifying a vehicle type comprises a receiver configured to receive vehicle type identification information from the vehicle.

According to an embodiment, the controller is configured to select said portion of said plurality of spray nozzles based on the location of a wheel unit.

According to an embodiment, the controller is configured to control the primary and/or auxiliary flow(s) by actuating a valve arrangement. Such an anti-icing system provides a fast response time of the spraying since the valve arrangement may be pressurized already when operating it, which allows for moving the vehicle in relation to the spray nozzle arrangement at a relatively high speed. Thereby, the anti-icing time may be further reduced.

According to an embodiment, said valve arrangement comprises a plurality of valves, each valve controlling the flow to a portion of said spray nozzle arrangement. Thereby, the spray pattern may be quickly reconfigured, allowing for faster and more accurate anti-icing.

According to an embodiment, said valve arrangement is located adjacent to the spray nozzle arrangement. Such a location of the valve arrangement provides an even faster response time of the spraying, allowing for moving the vehicle at an even higher speed.

According to an embodiment, the spray nozzle arrangement comprises at least one spray nozzle for spraying the vehicle from below, and at least one spray nozzle for spraying the vehicle from the side.

According to an embodiment, the anti-icing system is configured to direct said primary flow onto a wheel unit area mainly from below, and to direct said auxiliary flow onto a wheel unit mainly from the sides. This has proven to be an efficient spray pattern for many vehicle types.

According to an embodiment, said spray nozzle arrangement is reconfigurably mounted to a support grid. Thereby, available spray patterns to be selected may be added or removed as the vehicle park changes.

According to an embodiment, said support grid is shaped so as to, when in use, define a spray face that is curved about a portion of the vehicle.

According to an embodiment, the anti-icing system further comprises a tank arrangement extending along a relatively shorter spray zone, at which the spray nozzle arrangement is located, and along a relatively longer anti-icing liquid collection zone which is located, with respect to an intended driving direction of the vehicle, downstream of the spray zone. The anti-icing system's increased efficiency of the spraying allows for shortening the spray zone relative to the collection zone, thereby saving valuable space e.g. in a railway yard.

According to another aspect of the invention, parts or all of the above mentioned problems are solved, or at least mitigated, by a method of reducing icing of a vehicle on tracks, the method comprising moving the vehicle relative to a spray nozzle arrangement; determining the location, relative to the spray nozzle arrangement, of a portion to be sprayed of said vehicle; and, based on the location of the vehicle portion to be sprayed, initiating an increase or a decrease of a primary flow of anti-icing liquid through at least a portion of said spray nozzle arrangement. According to this method, less time and effort is spent on de- or anti-icing parts of the vehicle that are not critical to the functioning or safety of the vehicle. Thereby, the total time required for spraying a vehicle will be reduced, such that the vehicle may more quickly be put back in service. Furthermore, the method saves anti-icing liquid, thereby sparing the environment and reducing operating cost. By way of example, an increased primary flow may be provided when a vehicle portion to be sprayed is located in a spray zone in front of the spray nozzle arrangement. When the vehicle portion to be sprayed is no longer present in the spray zone, the primary flow may be decreased.

According to an embodiment, the method comprises determining the location, relative to the spray nozzle arrangement, of a wheel unit of said vehicle; and, based on the location of the wheel unit, initiating an increase or a decrease of an auxiliary flow of anti-icing liquid through at least a portion of said spray nozzle arrangement. Thereby, the auxiliary flow may be increased when a wheel unit is present in front of the spray nozzle arrangement, and/or decreased when a wheel unit is not present. In this manner, spraying will be focused on the wheel units, which are the most ice sensitive parts of the vehicle, thereby even further reducing spraying time and saving anti-icing liquid. The primary flow may be directed through a first portion of the spray nozzle arrangement, and the auxiliary flow may be directed through a second portion of the spray nozzle arrangement. Alternatively, the primary and auxiliary flows may be directed through the same spray nozzle(s).

According to an embodiment, the location of a vehicle portion to be sprayed is determined by means of a sensor arrangement comprising at least one wheel sensor.

According to an embodiment, the method comprises counting a number of wheel passages past said sensor arrangement; for each of a plurality of wheel passages past any of said at least one wheel sensor, obtaining a specific wheel-and-sensor combination identifying the location of a portion of the vehicle; and, for each of a plurality of said wheel-and-sensor combinations, increasing and/or decreasing said primary and/or auxiliary flow(s) based on the respective wheel-and-sensor combination. Each wheel-and-sensor combination identifies the instantaneous location of not only the wheel of that particular wheel-and-sensor combination, but of each point along the entire vehicle. Thereby, wheel-and-sensor combinations may be used for selectively spraying portions of a vehicle, such as wheel unit areas and/or wheel units, with a high accuracy so as to render the spraying more efficient.

According to an embodiment, the method comprises obtaining at least three wheel-and-sensor combinations using a plurality of wheel sensors separated longitudinally along the tracks. Thereby, the location of the vehicle may be obtained with a relatively high resolution, which increases the accuracy of the spraying. This may be of particular value e.g. in the event that the vehicle would change its speed during anti-icing. Preferably, said plurality of wheel sensors comprises at least three, and even more preferred, at least four longitudinally separated sensors.

According to an embodiment, the method comprises initiating at least one of said increase and/or decrease of a primary and/or auxiliary flow(s) based on a first wheel being sensed by a first sensor of said sensor arrangement; and initiating at least one of said increase and/or decrease of a primary and/or auxiliary flow(s) based on a second wheel being sensed by a second sensor of said sensor arrangement, said second wheel and second sensor being different from said first wheel and first sensor, respectively. Here, the terms first and second are only used for distinguishing wheels and sensors from each others, and do not signify any order.

According to an embodiment, the spray nozzle arrangement comprises a plurality of spray nozzles, the method comprising selecting a portion of said plurality of spray nozzles; and increasing and/or decreasing said primary and/or auxiliary flow(s) through the selected portion of the plurality of spray nozzles so as to form a selected spray pattern. In this manner, the spraying may be intensified, or the spray pattern may be modified as needed, as vehicle portions to be sprayed, such as wheel units or wheel unit areas, pass the spray nozzle arrangement.

According to an embodiment, the method comprises identifying a vehicle type, wherein said portion of said plurality of spray nozzles is selected based on the identified vehicle type.

According to an embodiment, said vehicle type is identified by communicating with the vehicle.

According to an embodiment, said portion of said plurality of spray nozzles is selected based on the location of a wheel unit.

According to an embodiment, said increase and/or decrease of a primary and/or auxiliary flow is obtained by actuating a valve arrangement comprising at least one pressurized valve. Controlling the flow by actuating a valve arrangement provides a fast response time of the spraying compared to e.g. actuating a pump. This allows for moving the vehicle in relation to the spray nozzle arrangement at a relatively high speed, which makes it possible to obtain a relatively short anti-icing time. The anti-icing response time may be further reduced by having the valve arrangement located adjacent to the spray nozzle arrangement.

According to an embodiment, the method comprises spraying the vehicle from below and from the sides.

According to an embodiment, said primary flow is directed onto a wheel unit area mainly from below, and said auxiliary flow is directed onto a wheel unit mainly from the sides.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a diagrammatic view in perspective of an anti-icing system;
Fig. 2 is a chart illustrating functional blocks of the anti-icing system of Fig. 1;
Fig. 3 is a diagrammatic view in perspective of the spray zone of the anti-icing system of Fig. 1;
Fig. 4a is a schematic side view of the spray zone of Fig. 3, illustrating the operation of the anti-icing system when a train is present in the anti-icing system at a first position;
Fig. 4b corresponds to the view of Fig. 4a, and illustrates the operation of the anti-icing system when the train is at a second position;
Fig. 4c corresponds to the view of Figs 4a-b, and illustrates the operation of the anti-icing system when the train is at a third position;
Fig. 4d corresponds to the view of Figs 4a-c, and illustrates the operation of the anti-icing system when the train is at a fourth position;
Fig. 5a corresponds to the view of Figs 4a-d, and illustrates the operation of the anti-icing system when the train is at a fifth position;
Fig. 5b corresponds to the view of Fig. 5a, and illustrates the operation of the anti-icing system when the train is at a sixth position;
Fig. 5c corresponds to the view of Figs 5a-b, and illustrates the operation of the anti-icing system when the train is at a seventh position;
Fig. 5d corresponds to the view of Figs 5a-c, and illustrates the operation of the anti-icing system when the train is at an eighth position;
Fig. 5e corresponds to the view of Figs 5a-d, and illustrates the operation of the anti-icing system when the train is at a ninth position; and
Fig. 5f corresponds to the view of Figs 5a-e, and illustrates the operation of the anti-icing system when the train is at a tenth position.

### Detailed description of the exemplary embodiments

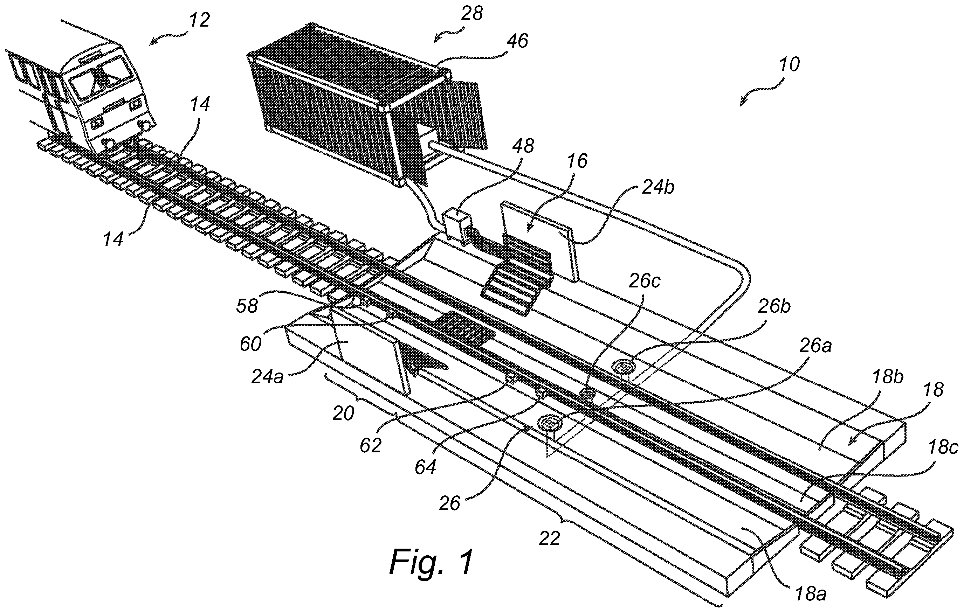

Fig. 1 schematically illustrates an anti-icing system 10 for reducing the build-up of ice on trains. Throughout this disclosure, the terms de-icing and anti-icing are used interchangeably, since the anti-icing system 10 may be used for de-icing as well as for anti-icing a train, i.e. leaving an ice-repellent coating of anti-icing liquid on the surface of the train after de-icing. The system 10 is configured as a drive-through system, i.e. a train 12, arriving on tracks 14 from the upper left corner of Fig. 1, passes through the system 10 without having to stop during the de-/anti-icing process.

The anti-icing system 10 comprises a spray nozzle arrangement 16 for spraying an anti-icing liquid onto the train 12, and a collection tank arrangement 18 for collecting anti-icing liquid dripping from the train 12. The tank arrangement 18 extends along a relatively short spray zone 20, at which the spray nozzle arrangement 16 is located, and a somewhat longer collection zone 22, along which no substantive spraying of anti-icing liquid occurs. The tank arrangement 18 comprises three collection tanks 18a, 18b, 18c extending along the rails 14. Two tanks 18a, 18b extend along the sides of the tracks 14, while a third tank 18c extends between the tracks 14. A pair of splash screens 24a, 24b on either side of the tracks 14 prevent splashing and spillage of anti-icing liquid outside the tank arrangement 18.

A drain arrangement 26 comprises a set of drains 26a-c located at the bottoms of the respective tanks 18a-c. The drain arrangement 26 allows a slush of spent anti-icing liquid, ice, and melted ice in the form of water, to be collected from the tank arrangement 18 by a recirculation plant 28. In the recirculation plant 28, collected slush is filtered from ice and other solid contamination, and melt water is separated from the anti-icing liquid, such that the anti-icing liquid can be re-used.

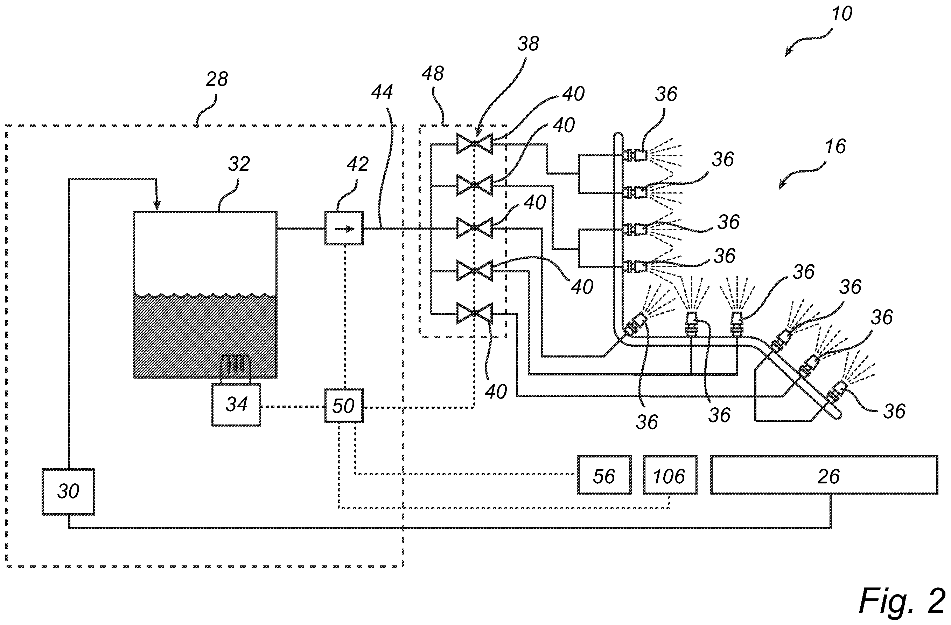

Turning now to Fig. 2, the recirculation plant 28 comprises an anti-icing liquid cleaning plant 30 for filtering the slush collected from the drain arrangement 26, and for separating melt water from anti-icing liquid. Cleaned anti-icing liquid is transferred to a storage tank 32, in which the anti-icing liquid is buffered until it is again sprayed via the spray nozzle arrangement 16. While in the storage tank 32, the anti-icing liquid is heated by a heater 34, typically to a temperature above 20 °C.

As is illustrated in Fig. 2, the spray nozzle arrangement 16 comprises a plurality of spray nozzles 36. A valve arrangement 38, comprising a plurality of valves 40, controls the flow of anti-icing liquid to the spray nozzle arrangement 16. For the purpose of controlling a spray nozzle arrangement 16 comprising a large number of nozzles 36, it may be beneficial to provide anti-icing liquid to a smaller group of e.g. 2-4 spray nozzles 36 via each single valve 40. Fig. 2 illustrates that there may be a one-to-one or one-to-several correspondence between the valves 40 and the spray nozzles 36; however, this is not necessary; also a several-to-one correspondence is possible. When the system 10 is in operation, anti-icing liquid is pumped from the storage tank 32 towards the spray nozzle arrangement 16 by means of a pump 42, so as to maintain an upstream side 44 of the valve arrangement 38 pressurized with anti-icing liquid. Thereby, spraying may be quickly initiated by opening one or several valves 40 of the valve arrangement 38, so as to release the already pressurized anti-icing liquid to the respective spray nozzle(s) 36.

As is illustrated by a dashed rectangle, the recirculation plant 28, which may comprise large, complicated processing equipment for cleaning the anti-icing liquid, may be located within a housing formed by e.g. a cargo container 46 (Fig. 1). Thereby, the anti-icing system 10 may be prepared or assembled at a central site, and quickly transported to and installed at a de-icing site when needed. This reduces the amount of time required for on-site installation, which provides for a minimum of disturbance to the operation of e.g. a railway yard. The valve arrangement 38 may be located in a separate housing 48 adjacent to the spray nozzle arrangement 16, so as to minimize the delay between the operation of a valve 40 and the response of the spraying action of the respective spray nozzle(s) 36 connected to the valve 40. Such a design offers a large degree of freedom with respect to the location of the recirculation plant 28, since it can be located at several tens, or even hundreds of meters from the spray nozzle arrangement 16 without adversely affecting the spraying response time of the system 10. Typically, the valve arrangement 38 may be located less than 10 meters from the spray nozzle arrangement 16.

Referring again to Fig. 2, a controller 50 is configured to control the operation of the heater 34, the pump 42, and the individual valves 40 of the valve arrangement 38. By selecting and operating subsets of valves 40, the controller 50 may generate a variety of spray patterns from the valve arrangement 16. Such spray patterns may be adapted to the specific anti-icing needs of different portions of the train 12, as will be illustrated in greater detail further below.

Typically, an anti-icing liquid would be a liquid having a freezing point below the freezing point of water, such that any anti-icing liquid residues remaining on the train after de-icing will remain in liquid or slush form when the train 12 is again exposed to cold climate. Thereby, any anti-icing liquid residues on the surface of the train 12 will prevent snow and ice from attaching to the train 12. Even though not necessary, the anti-icing liquid may optionally be heated when sprayed to the train 12, so as to increase the de-icing efficiency of the liquid when sprayed onto the train 12. Salt brine, ethylene glycol and propylene glycol are anti-icing liquids well known in the art, but also other liquids may be used for the purpose, such as alcohols, water solutions of sugar (e.g. glucose), or any combination of those anti-icing liquids.

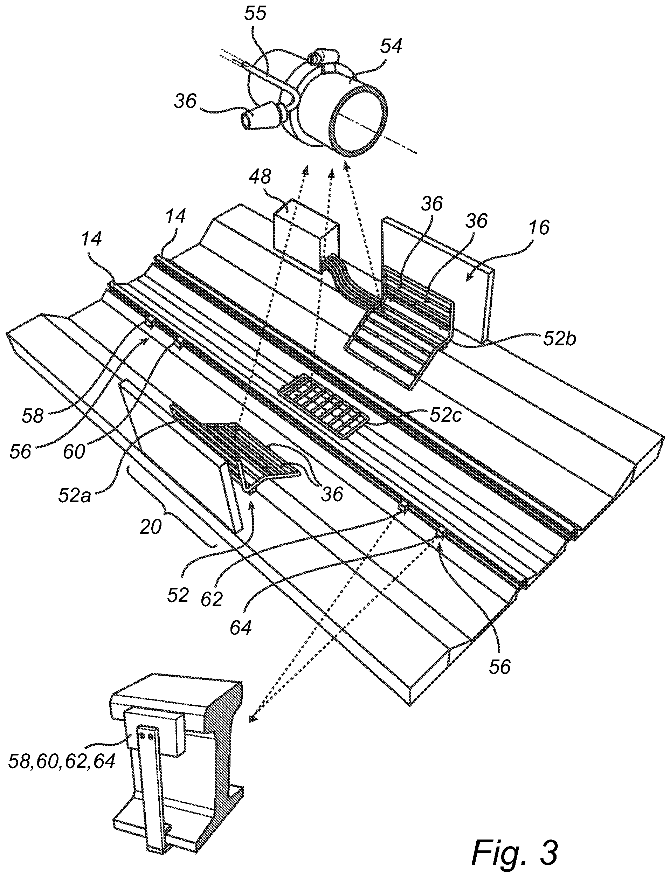

Turning now to Fig. 3, the spray zone 20 and its immediate surroundings will be described in greater detail. The spray nozzle arrangement 16 is fixedly arranged adjacent to the tracks 14, such that the spray nozzle arrangement 16 remains stationary while the train 12 (Fig. 1) passes the spray nozzle arrangement on the tracks 14. Even though it may be preferred that the spray nozzle arrangement 16 comprise between 15 and 100 spray nozzles 36 to facilitate optimization of a plurality of different spray patterns, the spray nozzle arrangement 16 may comprise any number of spray nozzles; however, for illustrative purposes, the exemplary spray nozzle arrangement 16 of fig. 2 is provided with about 45 spray nozzles 36. The spray nozzles 36 are mounted in a distributed manner to a nozzle support structure 52 comprising three nozzle support grids 52a, 52b, 52c. Two of the nozzle support grids form side support grids 52a, 52b located on either side of the tracks 14, whereas the third, central support grid 52c is located between the tracks 14. Each support grid 52a-c may be provided with one or several spray nozzles 36; however, for illustrative purposes, the exemplary nozzle support grids 52a-c of Fig. 3 are each provided with about 15 spray nozzles 36. The central support grid 52c holds its respective spray nozzles 36 along a horizontal, essentially flat surface, whereas each of the side support grids 52a-b defines a respective curved surface, so as to define a curved spray face along which its respective spray nozzles 36 are held. The curved spray faces defined by the side support grids 52a-b are shaped to curve about a lower portion of the train 12 when the train 12 is in the spray zone 20.

Each of the nozzle support grids 52a-c comprises a mesh of metal tubes 54, to which the respective spray nozzles 36 are clamped as is illustrated in the magnified view of Fig. 3. Anti-icing liquid is provided to the spray nozzles 36 via hoses 55. By untightening the clamping engagement, the spray nozzles 36 may be repositioned by translating them along the tubes 54. The spraying direction of the spray nozzles 36 may also be adjusted by turning the spray nozzles 36 about the tubes 54. Thereby, the entire spray nozzle arrangement 16 may be adjusted so as to be optimized for spraying the most ice sensitive parts of one or several particular train type(s).

A sensor arrangement 56 comprises a first, a second, a third and a fourth wheel sensor 58, 60, 62, 64 separated along the length of tracks 14. The first and second wheel sensors 58, 60 are located, with respect to the driving direction of the train 12 (Fig. 1), upstream of the spray zone 20, whereas the third and fourth wheel sensors 62, 64 are located downstream of the spray zone 20. As is illustrated in Fig. 2, the sensor arrangement 56 is connected to the controller 50, which is programmed to register each wheel passage past each sensor 58, 60, 62, 64, and to, for each sensor 58, 60, 62, 64, update a respective wheel count number in a memory in order to keep track of the number of wheels that have passed each sensor 58, 60, 62, 64. The wheel count numbers may be re-set to zero triggered by the occurrence of another wheel passage, or for each railway carriage, or after having anti-iced a train. Alternatively, the wheel count numbers may be updated indefinitely without re-set.

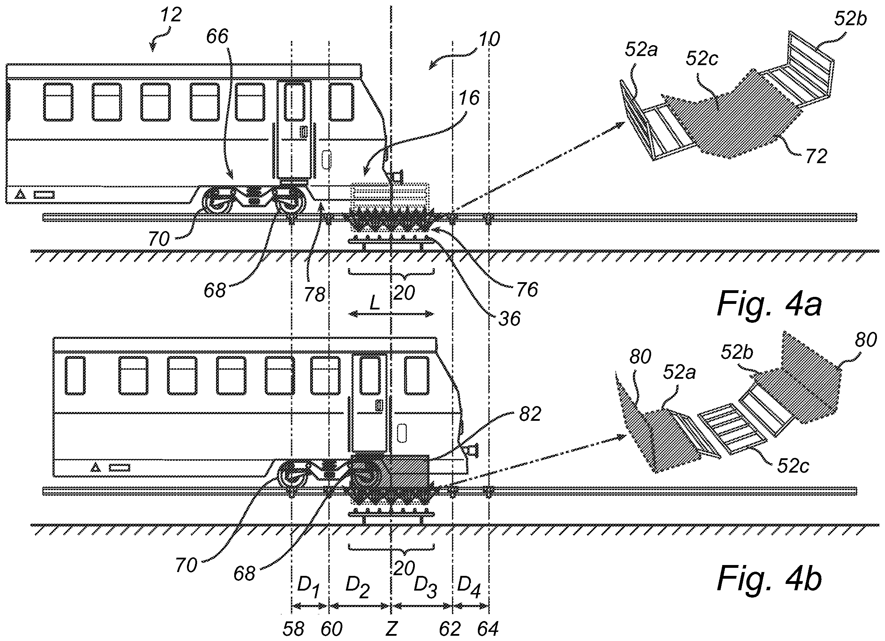

Figs 4a-d illustrate an exemplary operation of the anti-icing system 10. For reasons of clarity, the tank arrangement 18, recirculation plant 28, and valve arrangement 38 are omitted in Figs 4a-d.

A train 12 enters the anti-icing system 10 from left. The train 12 is provided with a plurality of wheel units of bogie type, of which only a first wheel unit 66 is illustrated in Figs 4a-d. The first wheel unit 66 comprises first and second axles (not shown), each axle being provided with a pair of wheels. Typically the wheel unit 66 may also be provided with a suspension arrangement such as spring suspension, shock absorbers, and brakes. For reasons of clarity, only one wheel of each wheel pair will be dealt with in the following. Hence, the first wheel unit 66 as illustrated in Figs 4a-d is provided with a first wheel 68 and a second wheel 70.

In the position of Fig. 4a, the first wheel 68 is detected by the first sensor 58, which triggers an update of the first sensor's wheel count number in the controller 50. Based on the wheel count numbers, the controller 50 identifies that the first wheel 68 is located at the first sensor 58, i.e. it identifies a first specific wheel-and-sensor combination defined by the first wheel 68 and the first sensor 58. Said specific wheel-and-sensor combination uniquely identifies the instant location of each single point of the train 12 along the tracks 14, and the first sensor 58 is located at such a distance from the spray zone 20 that the front 74 of the train 12 is located within the spray zone 20 when said first wheel-and-sensor combination is obtained. In response to the event of having identified said first wheel-and-sensor combination, the controller 50 selects a first group 72 of spray nozzles 36, and initiates a first flow 76 of anti-icing liquid through said first group 72 of spray nozzles 36 by opening a corresponding set of valves 40 of the valve arrangement 38 (Fig. 2). In the magnified detail view of Fig. 4a, the first group 72 of nozzles 36 is schematically illustrated by a hatched area. The first flow 76 is directed mainly upwards, such that the front 74 of the train 12 is sprayed. The front 74 of a train is generally exposed to icing; by selectively spraying the front 74, such icing may be reduced.

The first flow is maintained as the train 12 moves forward to the position illustrated in Fig. 4b, such that the underside of the train 12 is sprayed along a leading wheel unit guard area 78 in front of the first wheel unit 66. The leading guard area 78 is an area immediately in front of the wheel unit 66, the icing of which may affect the function of the wheel unit 66; therefore, it is preferred that the leading guard area 78 be kept reasonably ice free.

When having reached the position of Fig. 4b, the second wheel 70 is detected by the first sensor 58, and the controller 50 updates the wheel count number of the first sensor 58 accordingly. Based on the wheel count numbers, the controller 50 identifies that the second wheel 70 is located at the first sensor 58, i.e. it identifies a second specific wheel-and-sensor combination defined by the second wheel 70 and the first sensor 58. The first sensor 58 is located at such a distance from the spray zone 20 that the wheel unit 66 enters the spray zone 20 when said second wheel-and-sensor combination is identified. In response to the event of having identified said second wheel-and-sensor combination, the controller 50 selects a second group 80 of spray nozzles 36, and initiates a second flow 82 of anti-icing liquid through said second group 80 of spray nozzles 36 by opening a corresponding second set of valves 40 of the valve arrangement 38 (Fig. 2). The second flow 80, which is schematically represented in Fig. 4b by a hatched area, is directed mainly from the sides, such that the first wheel unit 66 of the train 12 is sprayed from the sides. Wheel units typically belong to the most ice sensitive portions of a train, with several moving parts such as brakes and suspension. Therefore, it is preferable that spraying of anti-icing liquid be focused on the wheel units.

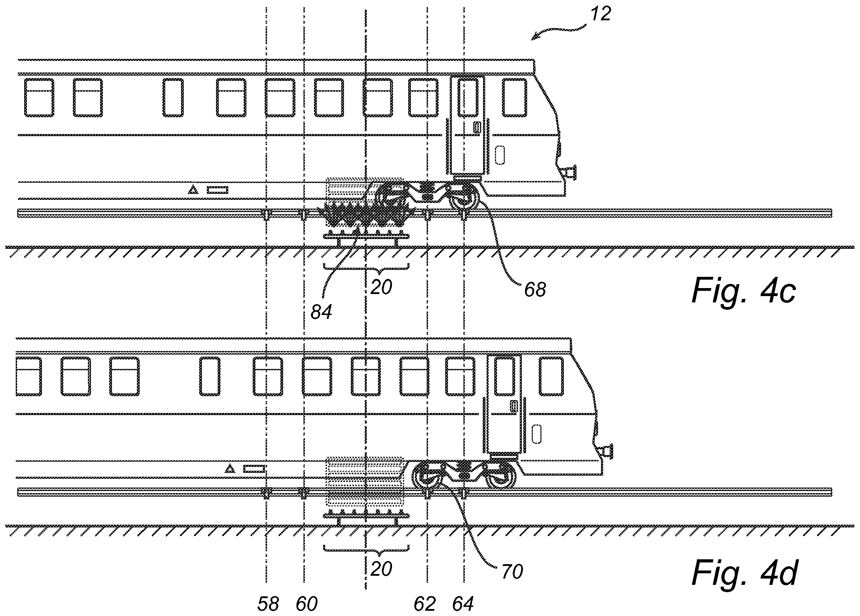

The first and second flows 76, 82 are maintained as the train 12 moves on to the position illustrated in Fig. 4c. When having reached the position of Fig. 4c, the first wheel 68 is detected by the fourth sensor 64, and the controller 50 updates the wheel count number of the fourth sensor 64 accordingly. Based on the wheel count numbers, the controller 50 identifies that the first wheel 68 is located at the fourth sensor 64, i.e. it identifies a third specific wheel-and-sensor combination defined by the first wheel 68 and the fourth sensor 64. The fourth sensor 64 is located at such a distance from the spray zone 20 that the wheel unit 66 exits the spray zone 20 when said third wheel-and-sensor combination is identified. In response to the event of having identified said third wheel-and-sensor combination, the controller 50 selects the second group 80 of spray nozzles 36, and stops the second flow 82 of anti-icing liquid through said second group 80 of spray nozzles 36 by choking or closing the corresponding second set of valves 40 of the valve arrangement 38 (Fig. 2). Thereby, the total flow of anti-icing liquid through the spray nozzle arrangement 16 is reduced in response to the wheel unit 66 exiting the spray zone 20, such that the consumption of anti-icing liquid is reduced.

The first flow 76 is still maintained as the train 12 moves on to the position illustrated in Fig. 4d, such that the underside of the train 12 is sprayed along a trailing wheel unit guard area 84 behind the first wheel unit 66. The trailing guard area 84 is an area immediately behind the wheel unit 66, the icing of which may affect the function of the wheel unit 66; therefore, it is preferred that also the trailing guard area 84 be kept reasonably ice free. When having reached the position of Fig. 4d, the second wheel 70 is detected by the third sensor 62, and the controller 50 updates the wheel count number of the third sensor 62 accordingly. Based on the wheel count numbers, the controller 50 identifies that the second wheel 70 is located at the third sensor 62, i.e. it identifies a fourth specific wheel-and-sensor combination defined by the second wheel 70 and the third sensor 62. The third sensor 62 is located at such a distance from the spray zone 20 that the trailing guard area 84 exits the spray zone 20 when said fourth wheel-and-sensor combination is identified. In response to the event of having identified said fourth wheel-and-sensor combination, the controller 50 selects the first group 72 of spray nozzles 36 (Fig. 4a), and stops the first flow 76 of anti-icing liquid through said first group 72 of spray nozzles 36 by choking or closing the corresponding first set of valves 40 of the valve arrangement 38 (Fig. 2). Thereby, the total flow of anti-icing liquid through the spray nozzle arrangement 16 is further reduced, or completely stopped, in response to the trailing guard area 84 exiting the spray zone 20, such that the consumption of anti-icing liquid is even further reduced. By selectively reducing or omitting spraying of relatively less icing sensitive portions of the underside of the train 12, the spraying of relatively more icing sensitive portions of the train 12 may be made more intense without having to increase the total capacity of the anti-icing system 10.

Now that the first wheel unit 66 has passed all four sensors 58, 60, 62, 64, the entire wheel unit area, i.e. the portion of the train chassis adjacent to the wheel unit 66 formed by the wheel unit 66 and the leading and training guard areas 78, 84, will have been sprayed from below, whereas only the wheel unit 66 has been substantially sprayed from the sides.

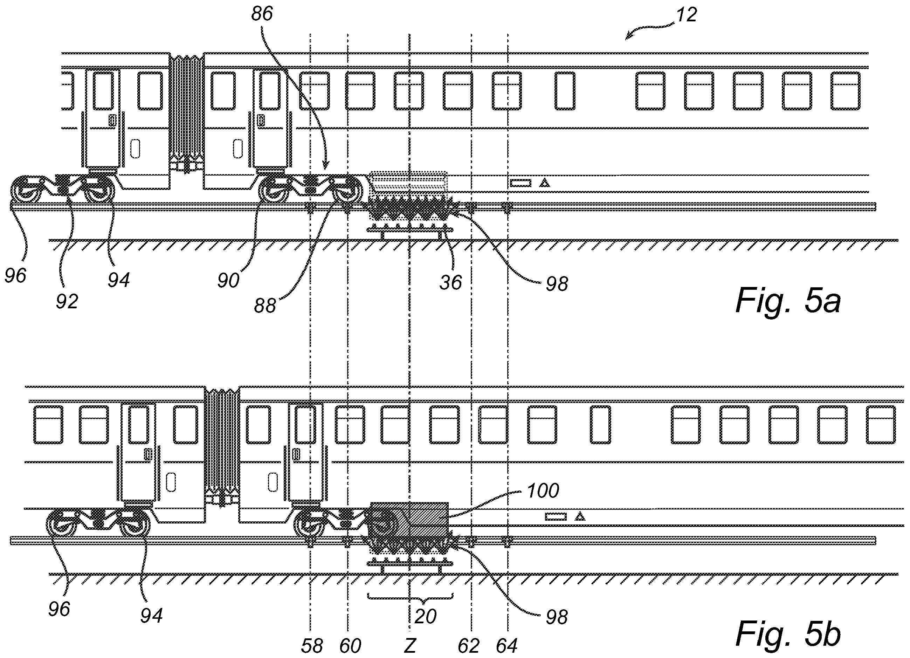

Turning now to Figs 5a-f, the operation of the anti-icing system 10 will be described as the train 12 continues passing through the anti-icing system 10. Again, only one wheel of each wheel pair will be dealt with; hence, Fig. 5a illustrates a second wheel unit 86 provided with a third wheel 88 and a fourth wheel 90; and a third wheel unit 92 provided with a fifth wheel 94 and a sixth wheel 96.

In Fig. 5a, the third wheel 88 has already passed the first sensor 58, which has triggered an update of the first sensor's wheel count number in the controller 50. Then, having reached the position of Fig. 5a, the third wheel 88 is detected by the second sensor 60, which triggers an update of the second sensor's wheel count number in the controller 50. Based on the wheel count numbers, the controller 50 identifies that the third wheel 88 is located at the second sensor 60, i.e. it identifies a fifth specific wheel-and-sensor combination defined by the third wheel 88 and the second sensor 60. In response to the event of having identified said fifth wheel-and-sensor combination, the controller 50 selects a third group of spray nozzles 36, and initiates a third flow 98 of anti-icing liquid through said third group of spray nozzles 36 by opening a corresponding third set of valves 40 of the valve arrangement 38 (Fig. 2). By way of example, the third group of spray nozzles 36 may be identical to the first group 72 of spray nozzles 36 described with reference to Fig. 4a, such that also said third flow 98 is, similar to the first flow 76, directed mainly upwards. Alternatively, the third flow 98 may be formed by activating a completely different set of spray nozzles 36. The third flow 98 sprays anti-icing liquid onto a guard area in front of the second wheel unit 86.

When having reached the position of Fig. 5b, the fourth wheel 90 is detected by the first sensor 58, and the controller 50 updates the wheel count number of the first sensor 58 accordingly. Based on the wheel count numbers, the controller 50 identifies that the fourth wheel 90 is located at the first sensor 58, i.e. it identifies a sixth specific wheel-and-sensor combination defined by the fourth wheel 90 and the first sensor 58. The identification of the sixth wheel-and-sensor combination tells the controller 50 that the second wheel unit 86 enters the spray zone 20. In response to the event of having identified said sixth wheel-and-sensor combination, the controller 50 selects a fourth group of spray nozzles 36, and initiates a fourth flow 100 of anti-icing liquid through said fourth group of spray nozzles 36 by opening a corresponding fourth set of valves 40 of the valve arrangement 38 (Fig. 2). By way of example, the fourth group of spray nozzles 36 may be identical to the second group 80 of spray nozzles 36 described with reference to Fig. 4b, such that the fourth flow 100 is directed onto the second wheel unit 86 mainly from the sides. Alternatively, also the fourth flow 100 may be formed by activating a different set of spray nozzles 36.

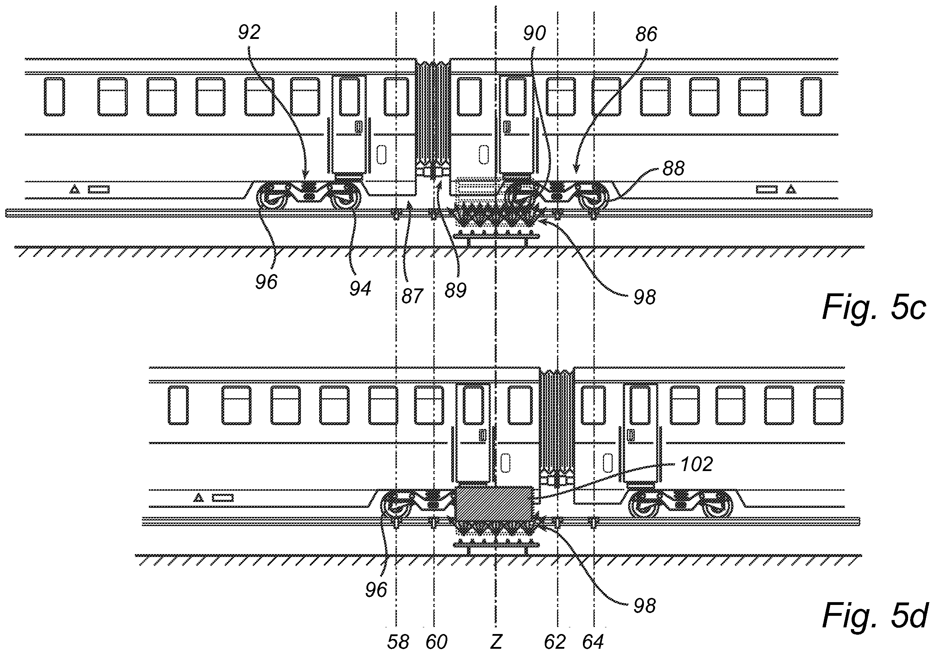

When having reached the position of Fig. 5c, the third wheel 88 is detected by the fourth sensor 64, and the controller 50 updates the wheel count number of the fourth sensor 64 accordingly. Based on the wheel count numbers, the controller 50 identifies that the third wheel 88 is located at the fourth sensor 64, i.e. it identifies a seventh specific wheel-and-sensor combination defined by the third wheel 88 and the fourth sensor 64. The seventh wheel-and-sensor combination indicates to the controller 50 that the second wheel unit 86 exits the spray zone 20. In response, the controller 50 stops the fourth flow 100 of anti-icing liquid through the fourth group of spray nozzles 36 by choking or closing the corresponding fourth set of valves 40 of the valve arrangement 38 (Fig. 2). The third flow 98 continues to spray onto a guard area 87 between the second and third wheel units 86, 92. While spraying the guard area 87, also a coupling 89, interconnecting two consecutive railway carriages, will be anti-iced. Anti-icing the coupling 89 is preferable, since couplings typically comprise moving parts, such as bellows, and functional elements, such as hydraulics, cabling and/or mechanical linkages, interconnecting the railway carriages.

When the controller 50 is notified of an eighth wheel-and-sensor combination, illustrated in Fig. 5d and defined by the sixth wheel 96 passing the first sensor 58, it selects a fifth group of spray nozzles 36, and initiates a fifth flow 102 of anti-icing liquid through said fifth group of spray nozzles 36 by opening a corresponding fifth set of valves 40 of the valve arrangement 38 (Fig. 2). By way of example, also the fifth group of spray nozzles 36 may be identical to the second group 80 of spray nozzles 36 described with reference to Fig. 4b, such that the fifth flow 102 is directed onto the third wheel unit 86 mainly from the sides. Alternatively, also the fifth flow may be formed by activating a different set of spray nozzles 36, so as to form a unique flow pattern.

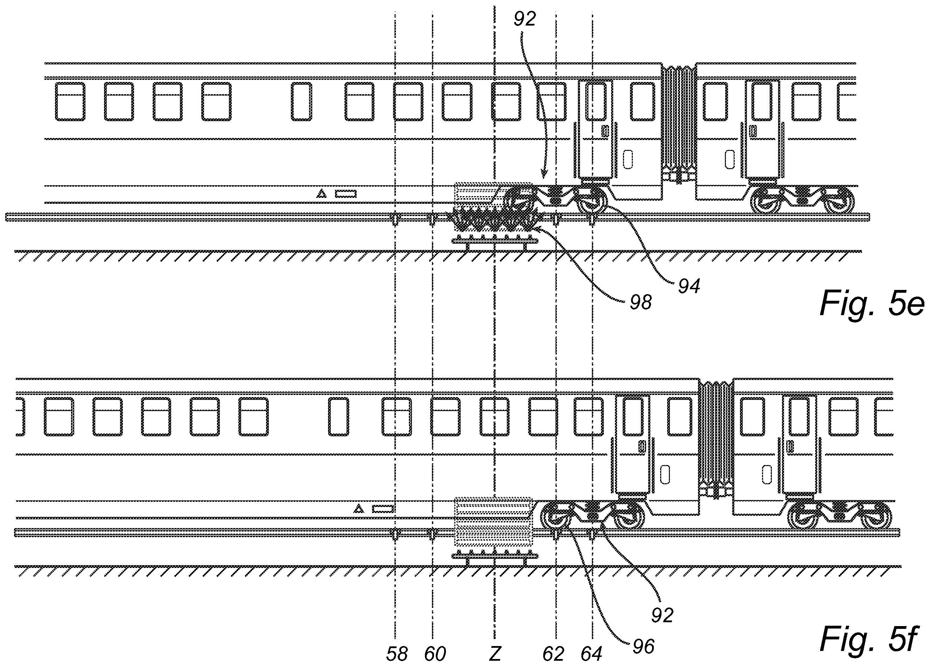

The fifth flow 102 is maintained as the train 12 moves on to the position illustrated in Fig. 5e, in which the fifth wheel 94 passes the fourth sensor 64 so as to define a ninth wheel-and-sensor combination. The ninth wheel-and-sensor combination indicates to the controller 50 that the third wheel unit 92 exits the spray zone 20. In response, the controller 50 stops the fifth flow 102 of anti-icing liquid through the fifth group of spray nozzles 36 by choking or closing the corresponding fifth set of valves 40 of the valve arrangement 38 (Fig. 2).

A tenth wheel-and-sensor combination, illustrated in Fig. 5f and defined by the third sensor 62 and the sixth wheel 96, triggers the stopping of the third flow 98 after having sprayed the underside of the train 12 along a trailing wheel unit guard area behind the third wheel unit 66.

The procedure described with reference to Figs 5a-f may be repeated for each railway carriage of the train 12 until the entire train 12 has passed.

Sometimes, two trains are connected in series to form a double train. To this end, after the entire train 12 has passed, an identical spraying procedure, exemplified by the procedure of Figs 4a-d and 5a-f, may be repeated again in the event that a wheel is again detected by the anti-icing system 10 within a time-out of e.g. 5-30 seconds. Such a time-out may be implemented in the controller 50.

For a detection and spraying scheme like the one illustrated in Figs 4a-d and Figs 5a-f, an exemplary suitable distance D1 (Fig. 4b) between the first and second sensors 58, 60 may typically be between 1 m (metre) and 2 m, and preferably about 1.5 m. An exemplary suitable distance D2 between the second sensor 60 and the centre Z of the spray zone 20 may typically be between 2 m and 3 m, and preferably about 2.5 m. An exemplary length L (Fig. 4a) of the spray zone 20, which is determined by the length along which spray nozzles 36 on the nozzle support grids 52a-c are operated, may typically be between 1 m and 3 m, and preferably about 1.6 m. An exemplary suitable distance D3 (Fig. 4b) between the centre Z of the spray zone 20 and the third sensor 62 may typically be between 2 m and 3 m, and preferably about 2.5 m. An exemplary suitable distance D4 between the third sensor 62 and the fourth sensor 64 may typically be between 1 m and 2 m, and preferably about 1.5 m. In the illustrated example, D1≈D4 and D2≈D3.

Clearly, the wheel-and-sensor combinations based on which spraying should be increased/initiated or decreased/stopped may be different for different types of trains, since wheel units may be of different designs and any guard areas 78, 84 in need of spraying may be located differently. Furthermore, spray nozzles 36 may be selected differently to form differently composed groups 72, 78 of spray nozzles 36 depending on e.g. the train's 12 wheel unit design or chassis design. By way of example, the first group 72 may consist of a first set of spray nozzles configured to be activated for all train designs, and a second set of designated, train type-specific spray nozzles specifically adjusted for spraying only a particular component of the train type to be de-iced.

To increase the timing accuracy of the starting and stopping of the flow(s) of anti-icing liquid, and to optimize the selection of spray nozzles 36 for each spray pattern, the anti-icing system 10 may be provided with a communication device 106 (Fig. 2) for communicating with the train 12 to be de- and/or anti-iced. Thereby, the identity or type of the train 12 can be automatically identified by the anti-icing system 10, such that the correct spray patterns may be activated and de-activated at the correct points of time. By way of example, an RFID (radio-frequency identification) tag may be attached to each individual train, and the communication device 106 may be an RFID reader mounted adjacent to the tracks 14. Alternatively, individual trains 12 may be provided with a GPS (Global Positioning System) receiver and a mobile communications transmitter for communicating their position to a railway traffic control system (not shown), and the communication device 106 may comprise a network interface or a mobile communications receiver for communicating with the railway traffic control system.

Information communicated to the anti-icing system 10 may, by way of example, comprise train identity, train type, train length, number of railway carriages, number of bogies, number of wheels, wheel unit length, wheel unit location, guard area length, and/or information identifying areas to be sprayed. Alternatively, one or several of those parameters may be provided to the controller 50 as operator input via an operator interface such as a keyboard or a touch screen.

In the above examples, each of the first and third flows 76, 98 of anti-icing liquid may be regarded as a primary flow, while each of the second, fourth and fifth flows 82, 100, 102 of anti-icing liquid may be regarded as an auxiliary flow, which is controlled independently of the respective primary flow. This is merely an example; a primary flow may be directed onto any selected portion of the train to be anti-iced, e.g. onto the sides of the wheel units, and one or several optional auxiliary flow(s) may be directed onto any other selected portion of the train to be anti-iced.

Thanks to the individual control of nozzles or valves/groups of valves, spray flow patterns may be initiated, stopped, increased, reduced and/or modified based on e.g. the position of the train 12. Thereby, the anti-icing may be focused onto the train portions that are the most exposed to icing, and onto the train portions that are the most sensitive to icing. The train front 74; the wheel units 66, 86, 92 including wheels, suspension and brakes; the wheel unit areas including guard areas 78, 84, 87; and the couplings 89 are examples of such exposed and/or sensitive portions. The spraying of other portions of the train 12 may be reduced or omitted, thereby saving anti-icing time and liquid.

The portions of the train 12 to be sprayed may, as illustrated in the examples above, be pre-defined. Alternatively, an ice detector may be connected to the controller for dynamically determining the portions of the train 12 to be sprayed. Such an ice detector may be based on e.g. a spectrometer and/or a camera, and may be connected to an associated image processor implemented e.g. in the controller 50.

The invention has mainly been described above with reference to a few embodiments. However, as is readily appreciated by a person skilled in the art, other embodiments than the ones disclosed above are equally possible within the scope of the invention as defined by the appended patent claims.

For example, the invention is not limited to a spray nozzle arrangement comprising several spray nozzles or groups of spray nozzles; also a spray nozzle arrangement comprising a single spray nozzle falls within the terms of the appended claims.

The invention may be used for many different types of vehicles on tracks, such as trams, and is not limited to trains only. Wheel units need not be of bogie type; the invention may also be used on other types of wheel units, such as single axle wheel units, individually suspended wheels, or multiple-axle arrangements. It is not necessary that the entire wheel unit be sprayed; selectively spraying only a portion of the wheel unit, such as brakes and/or shock absorbers, may provide a sufficient ice protection in some instances. Moreover, the invention is not limited to anti-icing of wheel units; it may be used for selectively anti-icing other portions of a vehicle on tracks instead, or in combination with anti-icing wheel units.

The anti-icing system need not be provided with wheel sensors; other means for determining the location of a vehicle also fall within the terms of the appended claims. By way of example, the train 12 may be provided with a GPS receiver, and the anti-icing system 10 may be provided with a communications receiver for receiving the train's position from the train. Such a communications receiver would represent the means for determining the location of a vehicle portion to be sprayed, as defined by the appended claims.

Moreover, several features of the embodiments described hereinbefore may be used independently of each other, and thereby form separate inventive concepts which may be the subjects of divisional patent applications. Hence, according to a second inventive concept, there is provided a general method of determining the position of a vehicle on tracks, the method comprising
counting a number of wheel passages past a sensor arrangement comprising at least one wheel sensor; and
for each of a plurality of wheel passages past any of said at least one wheel sensor, obtaining a specific wheel-and-sensor combination identifying the location of a portion of the vehicle. Such a method may be used for accurately determining the position of a vehicle such as a train in a train washer or along a railway station platform.

According to a third inventive concept, there is provided a general method of selectively anti-icing portions of a vehicle on tracks using a spray nozzle arrangement comprising a plurality of spray nozzles, the method comprising
selecting a portion of a plurality of spray nozzles; and
initiating an increase and/or decrease of a flow through the selected portion of the plurality of spray nozzles so as to form a selected spray pattern. Thereby, the spray pattern may be adapted for the specific vehicle portions to be selectively anti-iced.

According to a fourth inventive concept, there is provided a general method of preparing an anti-icing system for operation, the method comprising receiving vehicle type identification information from a vehicle to be anti-iced. Thereby, the anti-icing system may be operated in a manner optimized for the vehicle type.

According to a fifth inventive concept, there is provided a general method of reducing the icing of a vehicle on tracks, the method comprising moving the vehicle along the tracks relative to a spray nozzle arrangement; and controlling a flow through the spray nozzle arrangement by actuating a valve arrangement adjacent to the tracks. Such a method allows for an accurate flow control, thereby minimizing the spillage.

According to a sixth inventive concept, there is provided an anti-icing system for reducing the icing of a vehicle on tracks, the anti-icing system comprising a spray nozzle arrangement for spraying an anti-icing liquid onto the vehicle, the spray nozzle arrangement comprising at least one spray nozzle for spraying the vehicle from below, and at least one spray nozzle for spraying the vehicle from the side. Such an anti-icing system provides for an efficient de- or anti-icing also of more complex structures of the vehicle.

According to a seventh inventive concept, there is provided an anti-icing system for reducing the icing of a vehicle on tracks, the anti-icing system comprising a spray nozzle arrangement for spraying an anti-icing liquid onto the vehicle, said spray nozzle arrangement being reconfigurably mounted to a support grid. Thereby, the spray nozzle arrangement may be reconfigured to suit different types of vehicles.

According to an eighth inventive concept, there is provided an anti-icing system for reducing the icing of a vehicle on tracks, the anti-icing system comprising a spray nozzle arrangement for spraying an anti-icing liquid onto the vehicle; and a tank arrangement, the tank arrangement extending along a relatively shorter spray zone, at which the spray nozzle arrangement is located, and along a relatively longer anti-icing liquid collection zone which is located, with respect to an intended driving direction of the vehicle, downstream of the spray zone. Such an anti-icing system saves valuable space, e.g. in a railway yard.

## Claims

1. An anti-icing system for selectively reducing the icing of portions of a vehicle on tracks, the anti-icing system comprising
a spray nozzle arrangement (16) being able to spray an anti-icing liquid onto the vehicle (12);
means (56) being able to determine the location, relative to the spray nozzle arrangement (16), of a portion to be sprayed (66, 78, 84, 86, 92) of said vehicle (12); and
a controller (50) configured to, based on the location of the vehicle portion to be sprayed (66, 78, 84, 86, 92), initiate an increase or a decrease of a primary flow (76, 82, 98, 100, 102) of anti-icing liquid through at least a portion (72, 80) of said spray nozzle arrangement (16), wherein said anti-icing system is **characterized in that** it further comprises means (56) being able to determine the location, relative to the spray nozzle arrangement (16), of a wheel unit (66, 86, 92) of said vehicle (12), and wherein the controller (50) is configured to, based on the location of the wheel unit (66, 86, 92), initiate an increase or a decrease of an auxiliary flow (82, 100, 102) of anti-icing liquid through at least a portion (80) of said spray nozzle arrangement (16) controlled independently of the primary flow (76,98).

2. The anti-icing system according to any of the previous claims, wherein said means (56) for determining the location of a vehicle portion to be sprayed (66, 78, 84, 86, 92) comprises a sensor arrangement comprising at least one wheel sensor (58, 60, 62, 64).

3. The anti-icing system according to any of the claims 1-2, comprising at least one counter (50) for counting a number of wheel passages past said sensor arrangement (56).

4. The anti-icing system according to claim 3, the controller (50) being configured to
count a number of wheel passages past said sensor arrangement (56);
for each of a plurality of wheel passages past any of said at least one wheel sensor (58, 60, 62, 64), obtain a specific wheel-and-sensor combination identifying the location of a portion of the vehicle; and
for each of a plurality of said wheel-and-sensor combinations, increase and/or decrease said primary and/or auxiliary flow(s) (66, 78, 84, 86, 92) based on the respective wheel-and-sensor combination.

5. The anti-icing system according to any of the claims 3-4, said sensor arrangement (56) comprising a plurality of wheel sensors (58, 60, 62, 64) separated longitudinally along the tracks (14).

6. The anti-icing system according to claim 5, the controller (50) being configured to
initiate at least one of said increase and/or decrease of a primary and/or auxiliary flow(s) (76) based on a first wheel (68) being sensed by a first sensor (58) of said sensor arrangement (56); and
initiate at least one of said increase and/or decrease of a primary and/or auxiliary flow(s) (76; 98; 102) based on a second wheel (70; 88; 94) being sensed by a second sensor (62; 60; 64) of said sensor arrangement (56), said second wheel (70; 88; 94) and second sensor (62; 60; 64) being different from said first wheel (68) and first sensor (58), respectively.

7. The anti-icing system according to any of the previous claims, wherein the spray nozzle arrangement (16) comprises a plurality of spray nozzles (36), and the controller (50) is configured to
select a portion (72; 80) of said plurality of spray nozzles; and
initiate said increase and/or decrease of said primary and/or auxiliary flow(s) (76, 98; 82, 100, 102) through the selected portion (72; 80) of the plurality of spray nozzles (16) so as to form a selected spray pattern.

8. The anti-icing system according to any of the claims 1-7, wherein the anti-icing system (10) is configured to direct said primary flow (76) onto a wheel unit area (66, 78, 84, 86, 92) mainly from below, and to direct said auxiliary flow (82) onto a wheel unit (66, 86, 92) mainly from the sides.

9. A method of selectively reducing icing of portions of a vehicle on tracks, the method comprising
moving the vehicle (12) relative to a spray nozzle arrangement (16);
determining the location, relative to the spray nozzle arrangement (16), of a portion to be sprayed (66, 78, 84, 86, 92) of said vehicle (12);
based on the location of the vehicle portion to be sprayed (66, 78, 84, 86, 92), initiating an increase or a decrease of a primary flow (76, 82, 98, 100, 102) of anti-icing liquid through at least a portion (72, 80) of said spray nozzle arrangement (16);
determining the location, relative to the spray nozzle arrangement (16), of a wheel unit (66, 86, 92) of said vehicle (12); and
based on the location of the wheel unit (66, 86, 92), initiating an increase or a decrease of an auxiliary flow (82, 100, 102) of anti-icing liquid through at least a portion (80) of said spray nozzle arrangement (16) being controlled independently of the primary flow (76, 98).

10. The method according to any of the claims 9, wherein the location of a vehicle portion to be sprayed (66, 78, 84, 86, 92) is determined by means of a sensor arrangement (56) comprising at least one wheel sensor (58, 60, 62, 64).

11. The method according to claim 10, comprising
counting a number of wheel passages past said sensor arrangement (56);
for each of a plurality of wheel passages past any of said at least one wheel sensor (58, 60, 62, 64), obtaining a specific wheel-and-sensor combination identifying the location of a portion of the vehicle (12); and
for each of a plurality of said wheel-and-sensor combinations, increasing and/or decreasing said primary and/or auxiliary flow(s) (76, 82, 98, 100, 102) based on the respective wheel-and-sensor combination.

12. The method according to claim 11, comprising obtaining at least three wheel-and-sensor combinations using a plurality of wheel sensors (58, 60, 62, 64) separated longitudinally along the tracks (14).

13. The method according to any of the claims 10-12, comprising
initiating at least one of said increase and/or decrease of a primary and/or auxiliary flow(s) (76) based on a first wheel (68) being sensed by a first sensor (58) of said sensor arrangement (56); and
initiating at least one of said increase and/or decrease of a primary and/or auxiliary flow(s) (76; 98; 102) based on a second wheel (70; 88; 94) being sensed by a second sensor (62; 60; 64) of said sensor arrangement (56), said second wheel (70; 88; 94) and second sensor (62; 60; 64) being different from said first wheel (68) and first sensor (58), respectively.

## Patentansprüche

1. Enteisungssystem zum selektiven Verringern des Vereisens von Abschnitten eines Schienenfahrzeugs, wobei das Enteisungssystem Folgendes umfasst:
eine Sprühdüsenanordnung (16), die in der Lage ist, eine Enteisungsflüssigkeit auf das Fahrzeug (12) zu sprühen,
Mittel (56), die in der Lage sind, die Position eines zu besprühenden Abschnitts (66, 78, 84, 86, 92) des Fahrzeugs (12) relativ zur Sprühdüsenanordnung (16) zu bestimmen, und
eine Steuerung (50), die dafür konfiguriert ist, basierend auf der Position des zu besprühenden Fahrzeugabschnitts (66, 78, 84, 86, 92) eine Erhöhung oder eine Senkung eines Primärflusses (76, 82, 98, 100, 102) von Enteisungsflüssigkeit durch zumindest einen Abschnitt (72, 80) der Sprühdüsenanordnung (16) einzuleiten, wobei das Enteisungssystem **dadurch gekennzeichnet ist, dass** es ferner Mittel (56) umfasst, die in der Lage sind, die Position einer Radeinheit (66, 86, 92) des Fahrzeugs (12) relativ zur Sprühdüsenanordnung (16) zu bestimmen, und wobei die Steuerung (50) dafür konfiguriert ist, basierend auf der Position der Radeinheit (66, 86, 92) eine Erhöhung oder eine Senkung eines unabhängig vom Primärfluss (76, 98) gesteuerten Zusatzflusses (82, 100, 102) von Enteisungsflüssigkeit durch zumindest einen Abschnitt (80) der Sprühdüsenanordnung (16) einzuleiten.

2. Enteisungssystem nach einem der vorhergehenden Ansprüche, wobei das Mittel (56) zum Bestimmen der Position eines zu besprühenden Fahrzeugabschnitts (66, 78, 84, 86, 92) eine mindestens einen Radsensor (58, 60, 62, 64) umfassende Sensoranordnung umfasst.

3. Enteisungssystem nach einem der Ansprüche 1 bis 2, umfassend mindestens einen Zähler (50) zum Zählen einer Anzahl von Raddurchläufen vorbei an der Sensoranordnung (56).

4. Enteisungssystem nach Anspruch 3, wobei die Steuerung (50) dafür konfiguriert ist, um
eine Anzahl von Raddurchläufen vorbei an der Sensoranordnung (56) zu zählen,
für jeden einer Vielzahl von Raddurchläufen vorbei an einem des mindestens einen Radsensors (58, 60, 62, 64) eine die Position eines Abschnitts des Fahrzeugs kennzeichnende spezifische Rad-und-Sensor-Verknüpfung zu beziehen und
für jede einer Vielzahl der Rad-und-Sensor-Verknüpfungen basierend auf der jeweiligen Rad-und-Sensor-Verknüpfung den(die) Primär- und/oder Zusatzfluss(flüsse) (66, 78, 84, 86, 92) zu erhöhen und/oder zu senken.

5. Enteisungssystem nach einem der Ansprüche 3 bis 4, wobei die Sensoranordnung (56) eine Vielzahl von in Längsrichtung entlang der Schienen (14) getrennten Radsensoren (58, 60, 62, 64) umfasst.

6. Enteisungssystem nach Anspruch 5, wobei die Steuerung (50) dafür konfiguriert ist, um
basierend auf einem ersten Rad (68), das durch einen ersten Sensor (58) der Sensoranordnung (56) erfasst wird, mindestens eines der Erhöhung und/oder Senkung eines Primär- und/oder Zusatzflusses(flüsse) (76) einzuleiten, und
basierend auf einem zweiten Rad (70; 88; 94), das durch einen zweiten Sensor (62; 60; 64) der Sensoranordnung (56) erfasst wird, mindestens eines der Erhöhung und/oder Senkung eines Primär- und/oder Zusatzflusses(flüsse) (76; 98; 102) einzuleiten, wobei sich das zweite Rad (70; 88; 94) bzw. der zweite Sensor (62; 60; 64) vom ersten Rad (68) bzw. ersten Sensor (58) unterscheiden.

7. Enteisungssystem nach einem der vorhergehenden Ansprüche, wobei die Sprühdüsenanordnung (16) eine Vielzahl von Sprühdüsen (36) umfasst und die Steuerung (50) dafür konfiguriert ist, um
einen Abschnitt (72; 80) der Vielzahl von Sprühdüsen auszuwählen und
die Steigerung und/oder Senkung des(r) Primär- und/oder Zusatzflusses(flüsse) (76, 98; 82, 100, 102) durch den ausgewählten Abschnitt (72; 80) der Vielzahl von Sprühdüsen (16) einzuleiten, um ein ausgewähltes Sprühbild zu bilden.

8. Enteisungssystem nach einem der Ansprüche 1 bis 7, wobei das Enteisungssystem (10) dafür konfiguriert ist, den Primärfluss (76) auf einen Radeinheit-Bereich (66, 78, 84, 86, 92) hauptsächlich von unten her zu richten und den Zusatzfluss (82) auf eine Radeinheit (66, 86, 92) hauptsächlich von den Seiten her zu richten.

9. Verfahren zum selektiven Verringern des Vereisens von Abschnitten eines Schienenfahrzeugs, wobei das Verfahren Folgendes umfasst:
Bewegen des Fahrzeugs (12) relativ zu einer Sprühdüsenanordnung (16),
Bestimmen der Position eines zu besprühenden Abschnitts (66, 78, 84, 86, 92) des Fahrzeugs (12) relativ zur Sprühdüsenanordnung (16), Einleiten einer Steigerung oder einer Senkung eines Primärflusses (76, 82, 98, 100, 102) von Enteisungsflüssigkeit durch zumindest einen Abschnitt (72, 80) der Sprühdüsenanordnung (16) basierend auf der Position des zu besprühenden Fahrzeugabschnitts (66, 78, 84, 86, 92),
Bestimmen der Position einer Radeinheit (66, 86, 92) des Fahrzeugs (12) relativ zur Sprühdüsenanordnung (16) und
Einleiten einer Erhöhung oder einer Senkung eines unabhängig vom Primärfluss (76, 98) gesteuerten Zusatzflusses (82, 100, 102) von Enteisungsflüssigkeit durch zumindest einen Abschnitt (80) der Sprühdüsenanordnung (16) basierend auf der Position der Radeinheit (66, 86, 92).

10. Verfahren nach einem der Ansprüche 9, wobei die Position eines zu besprühenden Fahrzeugabschnitts (66, 78, 84, 86, 92) mittels einer mindestens einen Radsensor (58, 60, 62, 64) umfassenden Sensoranordnung (56) bestimmt wird.

11. Verfahren nach Anspruch 10, umfassend
Zählen einer Anzahl von Raddurchläufen vorbei an der Sensoranordnung (56),
Beziehen einer die Position eines Abschnitts des Fahrzeugs (12) kennzeichnenden spezifischen Rad-und-Sensor-Verknüpfung für jeden einer Vielzahl von Raddurchläufen vorbei an einem des mindestens einen Radsensors (58, 60, 62, 64) und
Erhöhen und/oder Senken des(r) Primär- und/oder Zusatzflusses(flüsse) (76, 82, 98, 100, 102) für jede einer Vielzahl von Rad-und Sensor-Verknüpfungen basierend auf der jeweiligen Rad-und-Sensor-Verknüpfung.

12. Verfahren nach Anspruch 11, umfassend Beziehen mindestens dreier Rad-und-Sensor-Verknüpfungen unter Verwendung einer Vielzahl in Längsrichtung entlang der Schienen (14) getrennter Radsensoren (58, 60, 62, 64).

13. Verfahren nach einem der Ansprüche 10 bis 12, umfassend
Einleiten mindestens eines der Erhöhung und/oder Senkung eines Primär- und/oder Zusatzflusses(flüsse) (76) basierend auf einem ersten Rad (68), das von einem ersten Sensor (58) der Sensoranordnung erfasst wird, und
Einleiten mindestens eines der Erhöhung und/oder Senkung eines Primär- und/oder Zusatzflusses(flüsse) (76; 98; 102) basierend auf einem zweiten Rad (70; 88; 94), das von einem zweiten Sensor (62; 60; 64) der Sensoranordnung (56) erfasst wird, wobei sich das zweite Rad (70; 88; 94) bzw. der zweite Sensor (62; 60; 64) vom ersten Rad (68) bzw. ersten Sensor (58) unterscheiden.

## Revendications

1. Système antigivre destiné à réduire sélectivement le givre de parties d'un véhicule sur rails, ce système antigivre comprenant :
un dispositif de buses de pulvérisation (16) apte à pulvériser un liquide antigivre sur le véhicule (12) ;
un moyen (56) apte à déterminer la position par rapport au dispositif de buses de pulvérisation (16) d'une partie à pulvériser (66, 78, 86, 92) dudit véhicule (12) ; et
un contrôleur (50) conçu pour, à partir de la position de la partie de véhicule à pulvériser (66, 78, 86, 92), initier une augmentation ou une réduction d'un flux primaire (76, 82, 98, 100, 102) de liquide antigivre à travers au moins une partie (72, 80) dudit dispositif de buses de pulvérisation (16), ledit système antigivre étant **caractérisé en ce qu'**il comprend en outre un moyen (56) qui est apte à déterminer la position, par rapport au dispositif de buses de pulvérisation (16) d'une unité de roue (66, 86, 92) dudit véhicule (12), et le contrôleur (50) étant conçu pour, à partir de la position de l'unité de roue (66, 86, 92), initier une augmentation ou une réduction d'un flux auxiliaire (82, 100, 102) de liquide antigivre à travers au moins une partie (80) dudit dispositif de buses de pulvérisation (16) contrôlé indépendamment du flux primaire (76, 98).

2. Système antigivre selon l'une quelconque des revendications précédentes, dans lequel ledit moyen (56) de détermination de la position d'une partie de véhicule à pulvériser (66, 78, 86, 92) comprend un dispositif de détection comprenant au moins un capteur de roue (58, 60, 62, 64).

3. Système antigivre selon l'une quelconque des revendications 1 à 2, comprenant au moins un compteur (50) pour compter un nombre de passages de roues après ledit dispositif de détection (56).

4. Système antigivre selon la revendication 3, le contrôleur (50) étant conçu pour
compter un nombre de passages de roues après ledit dispositif de détection (56) ;
pour chacun d'une pluralité de passages de roues après l'un quelconque desdits au moins un capteur de roue (58, 60, 62, 64), obtenir une combinaison spécifique de roue et de capteur identifiant la position d'une partie du véhicule ; et
pour chacune d'une pluralité desdites combinaisons de roue et de capteur, augmenter et/ou réduire lesdits flux primaire(s) et/ou auxiliaire(s) (66, 78, 84, 86, 92) à partir de la combinaison respective de roue et de capteur.

5. Système antigivre selon l'une quelconque des revendications 3 à 4, ledit dispositif de détection (56) comprenant une pluralité de capteurs de roues (58, 60, 62, 64) séparés longitudinalement le long des rails (14).

6. Système antigivre selon la revendication 5, le contrôleur (50) étant conçu pour
initier au moins une desdites augmentation et/ou réduction de flux primaire(s) et/ou auxiliaire(s) (76) à partir de la détection d'une première roue (68) détectée par un premier capteur (58) dudit dispositif de détection (56) ; et
initier au moins une desdites augmentation et/ou réduction de flux primaire(s) et/ou auxiliaire(s) (76, 98; 102) à partir de la détection d'une seconde roue (70 ; 90 ; 94) détectée par un second capteur (62 ; 60 ; 64) dudit dispositif de détection (56), lesdits secondes roue (70 ; 98 ; 94) et second capteur (62 ; 60 ; 64) étant différents respectivement desdits première roue (68) et premier capteur (58).

7. Système antigivre selon l'une quelconque des revendications précédentes, dans lequel le dispositif de buses de pulvérisation (16) comprend une pluralité de buses de pulvérisation (36) et le contrôleur (50) est conçu pour
sélectionner une partie (72 ; 80) de ladite pluralité de buses de pulvérisation ; et
initier ladite augmentation et/ou réduction desdits flux primaire(s) et/ou auxiliaire(s) (76, 98 ; 82, 100, 102) à travers la partie sélectionnée de la pluralité de buses de pulvérisation (16) de manière à former un modèle sélectionné de pulvérisation

8. Système antigivre selon l'une quelconque des revendications 1 à 7, dans lequel le système antigivre (10) est conçu pour diriger ledit flux primaire (76) sur une zone d'unité de roue (66, 78, 84, 86, 92) principalement par dessous et pour diriger ledit flux auxiliaire (82) sur une unité de roue (66, 86, 92) principalement par les côtés

9. Procédé de réduction sélective de givre de partie d'un véhicule sur rails, ce procédé comprenant
le déplacement du véhicule (12) par rapport à un dispositif de buses de pulvérisation (16) ;
la détermination, par rapport au dispositif de buses de pulvérisation (16), d'une partie à pulvériser (66, 78, 84, 86, 92) dudit véhicule (12) ;
à partir de la position de la partie de véhicule à pulvériser (66, 78, 84, 86, 92), l'initiation d'une augmentation ou d'une réduction d'un flux primaire (76, 82, 98, 100, 102) de liquide antigivre à travers au moins une partie (72, 80) dudit dispositif de buses de pulvérisation (16) ;
la détermination de la position, par rapport au dispositif de buses de pulvérisation (16), d'une unité de roue (66, 86, 92) dudit véhicule (12) ; et
à partir de la position de l'unité de roue (66, 86, 92), l'initiation d'une augmentation ou d'une réduction d'un flux auxiliaire (82, 100, 102) de liquide antigivre à travers au moins une partie dudit dispositif de buses de pulvérisation (16) qui est contrôlé indépendamment du flux primaire (76, 98).

10. Procédé selon la revendication 9, dans lequel la position d'une partie de véhicule à pulvériser (66, 78, 84, 86, 92) est déterminée au moyen d'un dispositif de détection (56) comprenant au moins un capteur de roues (58, 60, 62,64).

11. Procédé selon la revendication 10, comprenant
le comptage d'un nombre de passages de roues après ledit dispositif de détection (56) ;
pour chacun d'une pluralité de passages de roues après l'un quelconque desdits au moins un capteur de roues (58, 60, 62, 64), l'obtention d'une combinaison spécifique de roue et de capteur identifiant la position d'une partie du véhicule (12) ; et
pour chacune d'une pluralité desdites combinaisons de roue et de capteur, l'augmentation et/ou la réduction desdits flux primaire(s) et/ou auxiliaire(s) (76, 82, 98, 100,102) à partir de la combinaison respective de roue et de capteur.

12. Procédé selon la revendication 11, comprenant l'obtention d'au moins trois combinaisons de roue et de capteur en utilisant une pluralité de capteurs de roues (58, 60, 62, 64) séparés longitudinalement le long des rails (14).

13. Procédé selon l'une quelconque des revendications 10 à 12, comprenant
l'initiation d'au moins une desdites augmentation et/ou réduction de flux primaire(s) et/ou auxiliaire(s) (76) à partir de la détection d'une première roue (68) par un premier capteur (58) dudit dispositif de détection (56) ; et
l'initiation d'au moins une desdites augmentation et/ou réduction de flux primaire(s) et/ou auxiliaire(s) (76 ; 98 ; 102) à partir de la détection d'une seconde roue (68) par un second capteur (62 ; 60 ; 64) dudit dispositif de détection (56), lesdits seconde roue (70 ; 88 ; 94) et second capteur (62 ; 60 ; 64 étant respectivement différents desdits première roue (68) et premier capteur (58).
